# EUROPEAN PATENT APPLICATION

(11) **EP 1 462 790 A1**
(43) Date of publication of application: **29.09.2004**
(21) Application number: 03425188.4
(22) Date of filing: 25.03.2003
(51) Int. Cl.: G01M 19/00

(54) **Method and apparatus for testing a massaging device in a seating or leaning support**

(71) Applicant: Johnson Controls Seating Cap S.r.l., 10095 Grugliasco (TO) (IT)
(72) Inventor: De Miguel Posada, Juan Fernando, 10095 Grugliasco (TO) (IT)
(74) Representative: Gislon, Gabriele

(57) **Abstract**

Method for testing and/or calibration of a massaging device suitable to be placed in a seating and/or resting support for at least one user, comprising the phases of:
- disposing in one or more locations on the seating and/or resting support one or more sensors of at least a quantity univocally correlatable to the force exerted in said one or more locations by the massaging device;
- operating the massaging device;
- sensing through time the aforesaid quantity acquired by the aforesaid one or more sensors;
- comparing, for at least one of said sensors, the aforesaid quantity sensed through time with a corresponding default check value, or set of values, for said quantity.

## Description

The present invention relates to a method, and corresponding equipment, for testing and/or calibration of a massaging device designed to be positioned inside a seating or supporting structure (support) for at least one user, and in particular designed to be positioned inside a vehicle seat.

"Support" is intended here and hereunder as any structural element which one or more user may sit, lie or rest on, and provided with at least an external covering under which the aforesaid massaging device may be disposed.

It is known in the art to equip various supports for the human body with a massaging device which, through alternate or periodic operation of pressure elements suitable to produce slight localized and discontinuous pressure on certain areas of the human body resting on the support, may perform functions to activate the circulation or improve the well-being of the user making use of the support.

The pressure elements, appropriately disposed under the external covering of the seat, in areas in which the human body rests defined through careful physiological analysis, are activated by an programmable automatic controller that may determine, among other parameters, the degree of the pressure exerted by each pressure element and its persistence.

These massaging devices may also be equipped with sensors suitable to sense the load imparted by the user on the support, to allow, after a phase of adaptivity in which the device is capable of self-adjusting as a function of the load, variation of the aforesaid operating parameters, and in particular of the pressure exerted by each pressure element and of the persistence of said pressure. In this way, the device is capable of performing a massage on the body of the user which is substantially a function of the size and weight of the user, and which is therefore suitable for virtually any use.

The seats of vehicles, and in particular the seats of cars may be equipped with these massaging devices. Examples of seats for vehicles with massaging devices equipped with automatically controlled pressure elements are indicated in the patents US 2002/0111570 A1 (CUTLER), US 2002/0032395 A1 (KLINGLER) or US 2002/0003366 A1 (FOURREY).

In this case, operation of the massaging device, connected if necessary to the information network of the vehicle, must be carefully calibrated to prevent the massage from being bothersome or even damaging for users who may have sizes and weights differing greatly from one another and at the same time must adapt easily to the load and to the external conditions present. Incorrect setting of the operating parameters of the massaging device may oblige users to undergo disagreeable manipulation during a journey.

Calibration of the massaging device for vehicle seats may be implemented by setting the operating parameters of the aforesaid pressure elements according to theoretical values, obtained from medical literature, or alternatively by experimental values. In the latter case, several series of tests are performed in which different types of user are subjected to different operating methods of the massaging device and therefore, on the basis of the impressions of these users, the experimental values at which to set the operating parameters of the pressure elements are determined.

Nonetheless, due to the low tolerance of the human body to noteworthy variations in the massage from what is perceived as optimal, it is advisable for the seat equipped with the massaging device to be carefully tested, prior to final assembly of the seat on the vehicle, in order to guarantee that the massaging action performed by the device is acceptable and beneficial for the user. The inevitable assembly tolerances of the device in the seat, or any imprecisions in assembly of this seat, as the Applicant was able to establish, may in fact determine considerable variations of what is perceived by the user and therefore make further calibration of the massaging device necessary, even if initial setting of the operating parameters was performed correctly.

For this purpose, there are no known test and/or calibration methods and equipment for massaging devices placed in supports for users which are able to determine, objectively, that the massage performed by the massaging device corresponds to what is considered optimal for the users. There is therefore the need for a method and equipment which, in a simple and reliable way, is capable of testing the massaging device, once it has been assembled on a support for one or more users.

An object of the present invention is to provide a method, and produce equipment which implements this method, for testing and/or calibration of a massaging device disposed inside a support for one or more users. The object of this method is therefore to check that the massage performed by the device inside the support corresponds to what is considered to be an optimal massage, which is defined a priori and is obtained following theoretical analysis or practical tests.

Another object of the present invention is to provide a method for testing a massaging device disposed inside a seating or resting (leaning) support for one or more users which is reliable, provides consistent results and is at the same time simple and quick to implement.

A further object of the present invention is to produce equipment to test or calibrate a massaging device placed inside a seating or resting support which is easy to adapt to the different types of massaging device and/or support inside which said device is fitted.

Yet another object of the present invention is to provide testing or calibrating equipment which is simply constructed and easy to use.

These and other objects are obtained by the method according to the first independent claim and the subsequent dependent claims and by the equipment according to the thirteenth independent claim and the subsequent claims dependent on it.

The method for testing and/or calibration of a massaging device suitable to be placed in a seating and/or resting support for at least one user, according to the present invention, comprises the phases of:
- disposing in one or more locations on the seating and/or resting support one or more sensors of at least a quantity univocally correlatable to the force exerted in said one or more locations by the massaging device;
- operating the massaging device;
- sensing through time the aforesaid quantity acquired by the aforesaid one or more sensors;
- comparing, for at least one of said sensors, the aforesaid quantity sensed through time with a corresponding default (preset) check value, or set of values, for said quantity.

By sensing a quantity univocally correlatable to the force exerted locally by the massaging device on the seating and/or resting support and comparing it with optimal values established a priori for the same previously chosen quantity (for example the force, acceleration, pressure, velocity or movement of the support exerted by the massaging device), it is possible to accurately and quickly test the massaging device, and subsequently calibrate it if necessary.

In the case in which the default check values are relative to the specific location in which instantaneous sensing is performed of the force exerted by the massaging device on the support (or of another quantity univocally correlatable to it, such as pressure, acceleration, velocity or movement of the support), and when the values sensed are compared with the check values for different locations on the support, and thus for a certain number of sensors, testing of the massaging device placed inside the seating and/or supporting structure is particularly efficacious and reliable.

According to a preferred aspect of the method of the present invention, a static load is applied to the support, in at least one area of it, to simulate the presence of a human body resting or sitting on the support. Advantageously, the static load, which may vary as a function of the location on which it is imparted, is exerted at and through the aforesaid sensors.

The equipment for testing and/or calibration of a massaging device designed to be placed in a seating and/or resting support for at least one user comprises, according to the present invention:
- one or more sensors of at least a quantity univocally correlatable to the force exerted locally by the massaging device on the support;
- means to operatively associate said one or more sensors respectively to one or more locations of the seating or resting support; and
- means to acquire through time the signals emitted by the sensors.

Acquisition of the signals emitted by the force sensors, or of another quantity univocally correlatable to this, for example through a processor, and their subsequent processing by an operator, for example viewing or further mathematical processing, makes it possible to obtain efficacious indications concerning operation of the massaging device disposed inside the seating and/or resting support.

In a preferred embodiment of the device according to the present invention, this also comprises processing means designed to compare the signals coming from the sensors with preset check values and if necessary to produce instructions, in feedback, for the massaging device present in the seating or resting support.

Equipment and an implementation of the method according to the present invention shall now be described purely as a non-limiting example, with reference to the attached figures, in which:
figure 1 is a schematic view of equipment for testing and/or calibration of a massaging device placed in a seating or resting support, according to a particular aspect of the present invention;
figure 2 is a schematic view of the equipment in figure 1, during testing of a massaging device placed in a back seat of a motor vehicle;
figure 3 is a diagram of a method for testing and/or calibration of a massaging device placed in a seating or resting support, according to a preferred aspect of the present invention, which may be implemented by the equipment in the previous figures;
figure 4 is an example of a temporal diagram obtained through the equipment in the previous figures; and
figure 5 is another example of temporal diagram obtained through the equipment in the previous figures.

With reference to the figures in general, the equipment for testing and/or calibration of a massaging device placed in a seating or resting support 10, according to the present invention, comprises one or more sensors 3, 9 of a quantity univocally correlatable to the force exerted locally by the massaging device on the support 10; means 4 to operatively associate the aforesaid one or more sensors 3, 9 respectively with one or more locations of the support 10; and means 8 to acquire through time the signals emitted by the aforesaid one or more sensors 3, 9.

The acquisition and subsequent processing, by the operator or by suitable processing means 6, 7, 8 of the signals coming from the sensors 3, 9, makes it possible to assess the performances of the massaging device (not shown) fitted inside the seating or resting support 10, according to the method claimed herein.

According to the present invention, the method for testing and/or calibration of a massaging device placed in a seating and/or resting support 10 for at least one user, comprises, generally, the phases of:
- disposing in one or more locations on the support 10, one or more sensors 3, 9 of at least a quantity univocally correlatable to the force exerted by the massaging device on the support 10 (phase 101);
- operating the massaging device inside the support 10 (phase 102);
- sensing through time the aforesaid at least a quantity acquired by the sensors 3, 9 in the aforesaid one or more locations, through the sensors 3, 9 (phase 104); and
- comparing, for at least one of said sensors 3, 9, the chosen quantity sensed through time with a corresponding default check value, or set of check values, for said quantity (phase 105).

The quantity acquired by the sensors 3, 9 may be, according to a specific aspect of the present invention, directly the force (load) exerted locally by the massaging device on the external covering of the support 10, and in this case the sensors 3, 9 may be load cells, or may be a quantity chosen from: pressure, acceleration, velocity or movement of the support 10.

Advantageously, as will be explained hereunder, the method, in a preferred embodiment, also includes imparting a static load acting on the support 10, maintained throughout testing, and suitable to simulate the real presence of a human body disposed on the support 10.

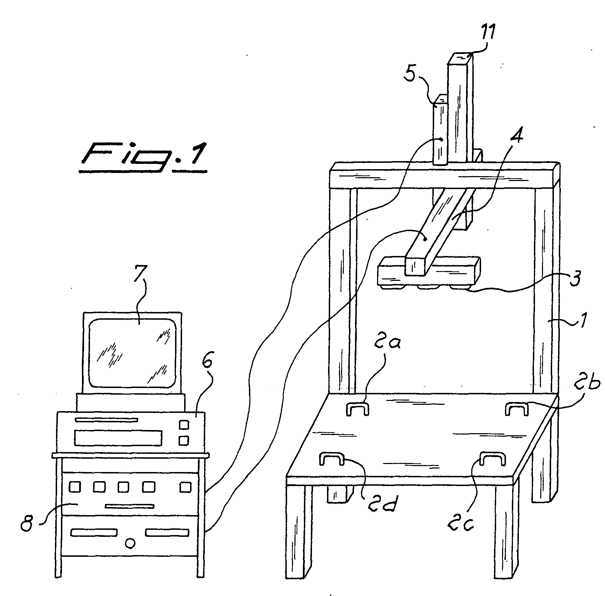

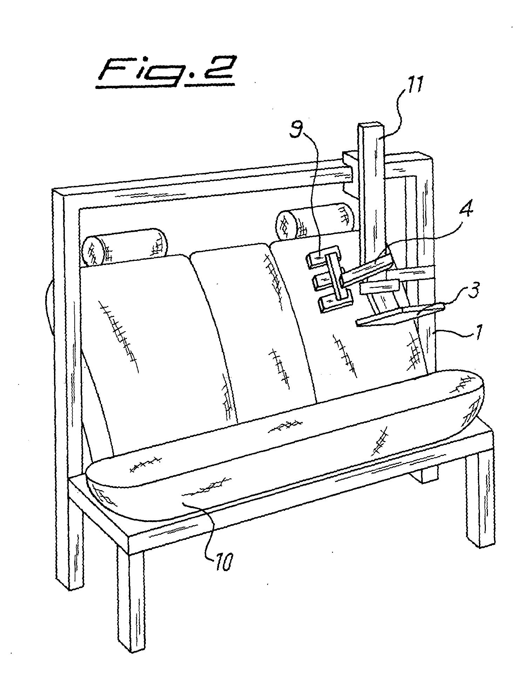

In the particular embodiment of the equipment according to the present invention, shown schematically in figures 1 and 2, the sensors 3, 9 are load cells which directly sense the force exerted by the massaging device on the support 10 in the locations in which the sensors 3, 9 are placed, and the signals emitted through time by these load cells 3, 9 are first amplified (and filtered if necessary) and then, once they have been digitalized, are acquired through a processor 6, 7,8.

It can be seen that the means 8 to acquire through time the signals emitted by the sensors 3, 9 may preferably be, as described above, of the type capable of processing digital signals, and therefore comprise for example a device to convert analog signals into digital signals and a processor 6, 7, 8 equipped with means to memorize and process data. Nonetheless, these means 8, without departing from the objectives of the present invention, may alternatively be of the type capable of allowing the operator to view (for example by means of the trace of a corresponding graph through operation of a pen on a strip of moving paper) the electric signals emitted by the sensors 3, 9 or to hold these signals only in an instantaneous way and supply them to a device capable of instantaneously assessing whether they fall within the range of default check values determined by the operator.

The load cells 3, 9 may advantageously be supported by a articulated structure 4, equipped with rods connected to one another by pivots or runners, which allow the load cells 3, 9 to be easily adapted to the conformation of the seating and/or supporting structure, for example a seat for motor vehicles 10. The articulated structure 4 is also fixed to an arm 11 which is designed to impart a preload (static load) on the seat 10 through the load cells 3, 9, and which is operated, in the specific embodiment of the equipment described herein, through moving means 5. These means 5, suitable to impart a static load on the cells 3, 9 and therefore on the seat 10, may for example comprise worm screw mechanism or a jack operating through a fluid. The means 5 may advantageously be adjusted through an automatic controller or in any case operated in a power assisted way by the operator. The arm 11 and the articulated structure 4 constitute the aforesaid means for operatively associating the sensors 3, 9 with the support 10, respectively in one or more locations of the latter.

Alternatively, the arm 11 may not be equipped with a articulated structure 4 and consequently the sensors 3, 9 may be assembled differently each time on this arm 11. Moreover, the means 5 to impart a static load may be simple removable counterweights connected to the arm 11, or to the structure 4, by the operator.

The equipment shown schematically also comprises a frame 1 equipped with fixing brackets 2a, 2b, 2c and 2d for the seating and/or supporting structure 10.

As may be deduced from figure 2, the load cells 3 and the load cells 9 may be operatively associated, through the articulated structure 4, respectively with the back and with the seat of the seat 10, so that they may acquire force measurements simultaneously from these locations. Moreover, imparting a static load, which may differ as a function of the area of the seat 10 to which it is applied, in the various locations of the back and of the seat in which the load cells 3, 9 are disposed, may allow simulation of the static load exerted by one or more human bodies on the seat 10 and therefore obtain extremely accurate and reliable measurements from the load cells 3, 9 during testing.

Once acquired, the signals emitted from the load cells 3, 9 may be viewed on a viewer 7 and/or memorized and processed, according to the method of the present invention, so that the operator, or processor 6, 7, 8 may compare these signals emitted from the load cells 3 and 9 with default check values and calibrate the massaging device if necessary.

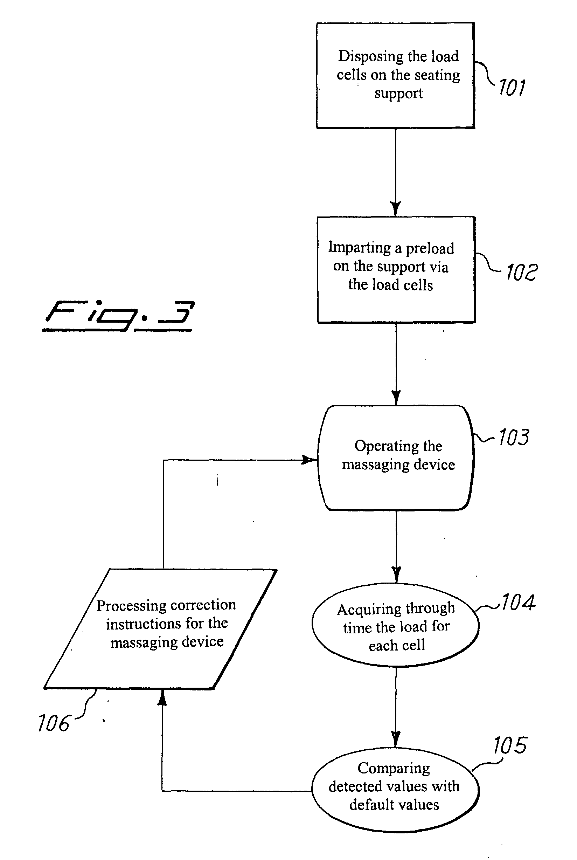

The equipment described hereinbefore allows implementation, according to a preferred aspect of the present invention, of the method, represented schematically in figure 3, of testing and/or calibration of a massaging device placed in a seating and/or resting support for one or more user.

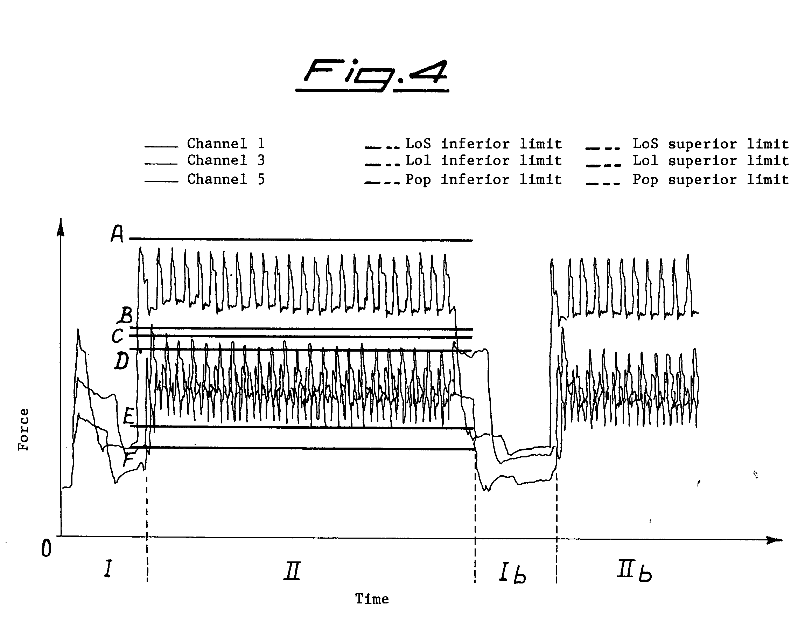

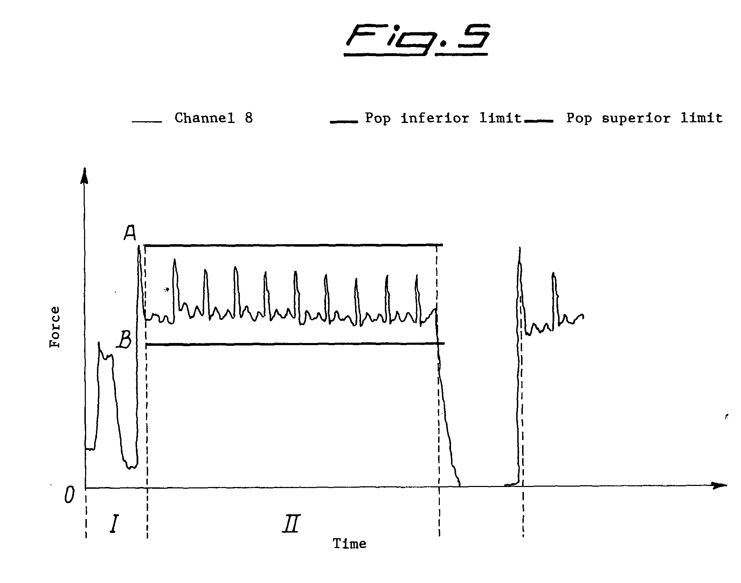

This preferred implementation of the method according to the present invention, with reference purely as an example to the equipment in figures 1 and 2 and to the seat for motor vehicles 10, includes the phases of:
- Phase 101: disposing the sensors 3, 9 (load cells) on the seat 10 for motor vehicles, in locations of said seat 10 deemed particularly important to determine the result of the massage on the human body. In this phase 101 the operator, acting on the articulated structure 4 and on the arm 11, disposes a plurality of these load cells 3, 9 on the seat 10, for example in different lumbar, ischial and popliteal locations;
- Phase 102: imparting, through the means 5, a static load (preload) on the load cells 3, 9 and therefore on the seat 10, through the arm 11. The different orientation of the cells 3, 9 in relation to the arm 11 and to the direction in which the preload is imparted, attainable through the articulated structure 4, allows the exertion of loads, orthogonal to the various supporting surfaces of the seat 10, differentiated as a function of the position obtained by each cell 3, 9. It is thus possible, for example, to vary distribution of the preload on the seat and on the back, as a function of the different testing requirements. The phase 102 allows simulation, by setting a suitable preload, of the presence of one or more users of the seat 10. This phase 102 may be followed by a phase (not shown) to calibrate the force values sensed by the load cells 3, 9 and to reset any values acquired in a previous test cycle;
- Phase 103: operating the massaging device inside the seat 10, with preset operating parameters. Operation of the massaging device may be independent from the processor 6, 7, 8 or may be controlled by it, so that the operating parameters of the massaging device may be modified if necessary, in feedback, directly by the processor 6, 7, 8.
- Phase 104: acquiring through time, instantaneously, the force values sensed by the load cells 3, 9 (sampling). The signals emitted by each load cell 3, 9 are, if necessary, digitalized and therefore can be put, by the processor 6, 7, 8, in the form of periodic temporal function (see figure 4), if necessary after a phase to process the signals (for example, by applying the FFT);
- Phase 105: comparing the periodic temporal function obtained by the signals emitted by each load cell 3, 9 with a set of default values, relative to the specific location in which the load cell that produced the periodic function is placed, to check whether this periodic function falls within the optimal limits of the massage represented by the aforesaid default values. In greater detail, as shown in figures 4 and 5, the latter representing a temporal diagram of the signal emitted by a single load cell, after an initial transient (bands I and I_{b} of the graphs), the periodic functions (II e II_{b}) inherent to the signals of each cell are compared with optimal values which, for each cell and therefore for each periodic function, constitute lower (B, E, F) and upper (A, C, D) limits within which the periodic function examined must oscillate for the massage to be pleasing for the user. The phase 105 may be performed manually by an operator who, having each single trace relative to the signal emitted by each load cell 3, 9 at his disposal, compares each trace with a mask in which the lower and upper limits of the corresponding sensed quantity are preset;
- Phase 106: in the case in which the periodic function of one of the signals coming from at least one cell 3, 9 oscillates above or below the lower or upper default limits (B, E, F and A, C, D) for the location in which the load cell 3, 9 is disposed, the operator or processor 6, 7, 8 can process instructions to correct the operating parameters of the massaging device, modifying them. If necessary, these instructions may be supplied directly to the control appliance of the massaging device during testing, thus producing a feedback control loop which allows automatic calibration of the massaging device.

According to the method described hereinbefore, testing and calibration of a massaging device placed inside the seat 10, with reference to the embodiment of the present invention shown in the figures, therefore includes, after fixing the seat 10 to the frame 1 using the brackets 2a, 2b, 2c and 2d, the load cells 3, 9, suitably disposed in the space by the articulated structure 4, are operatively associated with the seat 10 (phase 101), and a preload (phase 102) is imparted on them, or on the seat 10, by operating the means 5 acting on the arm 11.

Alternatively, through the means 5 and the arm 11, it is possible to impart a preload on the seat 10 in specific areas which may be adjacent to the locations chosen for the load cells 3, 9. In this way, although the cells 3, 9 are not subjected to this preload, the performance of the massaging device in the seat 10 may be made similar to the performance which occurs during use with the user or users resting on the seat 10.

Moreover, the preload (static load) imparted on the cells by the mean 5, thanks for example to the different positions of the cells 3, 9 in relation to the direction in which said preload is applied, as already mentioned hereinbefore, may vary for each location in which the load cells 3, 9 are present. By appropriately choosing the preload and its distribution on the seat 10 it is thus possible to simulate the presence of at least one human body, resting on the seat 10 during testing.

Subsequently, after having adjusted the signal emitted by the various load cells 3, 9, if necessary, and having reset any other readings memorized in the processor 6, 7, 8, the massaging device is made to operate, preferably under the control of the processor 6, 7, 8 (phase 103).

The operating parameters of the massaging device normally impart on the latter an initial phase of adaptivity of the device to the weight of the user (and therefore, in the case of testing, adaptivity to the preload set) and a subsequent massage phase as a function of the load. These phases can be seen in the figures 4 and 5, and are respectively indicated as I and I_{b} (adaptivity phase) and II, II_{b} (massage phase).

Sensing (phase 104) of the force exerted by the massaging device in the various locations in which the sensors 3, 9 have been placed then occurs with instantaneous acquisition, for each load cell 3, 9, of the electric signals emitted by these load cells, if necessary amplifying and filtering these signals and then putting them in numeric form (digitalization). The digitalized signals, acquired through time by the processor 6, 7, 8 and emitted by each load cell 3, 9, may therefore be represented in the same processor 6, 7, 8, excluding the initial transient constituted by the adaptivity phase I, I_{b} of the massaging device, as a temporal periodic function, oscillating between a maximum and a minimum (see figures 4 and 5).

Memorization and/or viewing of the periodic functions relative to each sensor 3, 9 allows subsequent comparison of the maximum and minimum values adopted by each function with respective upper and lower check limits (for example A and B) for that function, and therefore check limits for the action performed by the massaging device in that specific location of the seat 10 in which the sensor 3, 9 is disposed which produced the function examined (phase 105). If the function examined were to oscillate outside the default check limits, this would indicate an incorrect setting of the massaging device, which would therefore require to be calibrated.

The upper and lower check limits for each function correlated to a sensor 3, 9 may be determined a priori through the use of theoretical physiological parameters, which may be found in medical literature, or through statistical findings on samples of users.

The number of oscillations present in the massage phase II, II_{b} and/or the time duration of the massage phase II, II_{b} may also be checked through comparison with the check values preset by the operator and relative to each location subjected to sensing by a sensor 3, 9.

In the event in which it is necessary to calibrate the massaging device, this operation may be performed by an operator, by programming the controller of the massaging device, or may be assigned to a processor 6, 7, 8 (phase 106) which, by producing specific correction instructions directed at the controller of the massaging device, is able, during testing, to vary the operating parameters of the massaging device and consequently to adapt the massage, through feedback, thanks to the sensing of the sensors 3, 9.

## Claims

1. Method for testing and/or calibration of a massaging device placed in a seating and/or resting support for at least one user, comprising the phases of:
- disposing in one or more locations on said support, one or more sensors to acquire at least a quantity univocally correlatable to the force exerted in said locations by said massaging device;
- operating said massaging device;
- sensing through time said at least a quantity acquired by said one or more sensors;
- comparing, for at least one of said one or more sensors, said quantity sensed through time with a corresponding default check value, or set of values, for said quantity.

2. Method as claimed in claim 1, wherein said quantity univocally correlatable to the force exerted in said locations by said massaging device is chosen from: force, pressure, acceleration, velocity or movement of the support exerted by said massaging device.

3. Method as claimed in claim 1 or 2, comprising the phase of imparting a static load on at least one area of said support for at least one user.

4. Method as claimed in claim 1, 2 or 3, comprising the phase of imparting a static load on at least one of said one or more locations in which said one or more sensors are present.

5. Method as claimed in claim 3 or 4, wherein said static load differs as a function of the area or location on which it is imparted.

6. Method as claimed in any one of the claims 3, 4 or 5, wherein the total static load imparted simulates the load present in said one or more locations in which said one or more sensors are positioned when one or more users are disposed on the support.

7. Method as claimed in any one of the previous claims, wherein said check value or set of values for said quantity sensed through time constitutes the acceptable upper limit and/or lower limit for said quantity.

8. Method as claimed in claim 7, wherein said quantity sensed through time, following operation of said massaging device, produces, after an initial transient if necessary, a substantially periodic temporal function, said check value or set of values for said quantity constituting the acceptable upper limit and/or lower limit for said temporal function.

9. Method as claimed in any one of the claims 7 or 8, wherein it includes a phase to calibrate said massaging device if said quantity sensed through time exceeds said acceptable upper limit and/or said lower limit.

10. Method as claimed in any one of the previous claims, wherein operation of said massaging device comprises a phase of adaptivity to the load present on said support and a massage phase, said phase to compare said quantity sensed through time with a corresponding default check value, or set of values, for said quantity being implemented solely for the values of said quantity sensed solely in said massage phase.

11. Method as claimed in any one of the previous claims, wherein said check value or set of values of said quantity sensed through time are obtained a priori through physiological tests.

12. Method as claimed in any one of the previous claims, wherein said support is a seat for vehicles and said sensors are load cells.

13. Method as claimed in any one of the previous claims, wherein said phase to compare said quantity sensed through time with a corresponding default check value or set or values for said quantity is implemented for each sensor.

14. Equipment for testing and/or calibration of a massaging device placed in a seating and/or resting support for at least one user, **characterized in that** it comprises:
- one or more sensors of at least a quantity univocally correlatable to the force exerted locally by said massaging device;
- means to operatively associate said one or more sensors respectively with one or more locations of said support; and
- means to acquire through time the signals emitted by said one or more sensors.

15. Equipment as claimed in claim 14, wherein said at least a quantity univocally correlatable to the force exerted locally by said massaging device is chosen from: force, pressure, acceleration, velocity or movement of the support.

16. Equipment as claimed in claim 14 or 15, comprising means to convert said signals emitted by said one or more sensors into corresponding numeric values.

17. Equipment as claimed in claim 16, also comprising processing means for said signals emitted by the sensors and/or means to view corresponding numeric values.

18. Equipment as claimed in claim 17, wherein said processing means comprise at least a device to memorize data.

19. Equipment as claimed in claim 18, wherein said processing means are designed to compare signals coming from the sensors with preset check values.

20. Equipment as claimed in any one of the claims from 17 to 19, wherein said processing means provide instructions to adjust said massaging device as a function of said signals coming from the sensors.

21. Equipment as claimed in any one of the claims from 14 to 20, comprising means to impart a static load on one or more areas of said support.

22. Equipment as claimed in claim 21, wherein at least one of said one or more sensors is supported by a moving arm, said moving arm being operated by said means to impart a static load.

23. Equipment as claimed in claim 22, wherein said moving arm also constitutes said means for operatively associating said one or more sensors respectively with one or more locations of said support.

24. Equipment as claimed in any one of the claims from 14 to 23, wherein at least one of said sensors is a load cell.

25. Equipment as claimed in any one of the claims from 14 to 24, wherein said support is a seat and said equipment comprises at least one supporting bracket to connect said seat.

26. Equipment as claimed in claim 25, wherein said sensors are disposed on an adjustable articulated structure, adaptable to the conformation of said seat.
